# EUROPEAN PATENT SPECIFICATION

(11) **EP 3 487 250 B1**
(45) Date of publication and mention of the grant of the patent: **14.02.2024**
(21) Application number: 17839762.6
(22) Date of filing: 08.08.2017
(51) Int. Cl.: H04W 74/08, H04W 16/14, H04L 5/00, H04W 72/232

(54) **METHOD FOR TRANSMITTING AND RECEIVING UPLINK CHANNEL IN WIRELESS COMMUNICATION SYSTEM SUPPORTING UNLICENSED BAND, AND DEVICES SUPPORTING SAME**
VERFAHREN ZUM SENDEN UND EMPFANGEN EINES UPLINK-KANALS IN EINEM DRAHTLOSKOMMUNIKATIONSSYSTEM MIT UNTERSTÜTZUNG EINES UNLIZENZIERTEN BANDES UND VORRICHTUNG ZUR UNTERSTÜTZUNG DAVON
PROCÉDÉ D'ÉMISSION ET DE RÉCEPTION D'UN CANAL DE LIAISON MONTANTE DANS UN SYSTÈME DE COMMUNICATION SANS FIL PRENANT EN CHARGE UNE BANDE SANS LICENCE ET DISPOSITIFS PRENANT EN CHARGE LEDIT PROCÉDÉ

(30) Priority: 08.08.2016 US 201662371852 P
(43) Date of publication of application: 22.05.2019
(73) Proprietor: LG Electronics Inc., Seoul 07336 (KR)
(72) Inventor: KIM, Seonwook, Seoul 06772 (KR); KIM, Kijun, Seoul 06772 (KR); KIM, Byounghoon, Seoul 06772 (KR); AHN, Joonkui, Seoul 06772 (KR); YANG, Suckchel, Seoul 06772 (KR); YI, Yunjung, Seoul 06772 (KR)
(74) Representative: Maikowski & Ninnemann Patentanwälte Partnerschaft mbB
(86) International application number: PCT/KR2017/008538
(87) International publication number: WO 2018/030744

(56) References cited:
- WO-A1-2016/036219
- WO-A1-2016/036219
- WO-A1-2016/070417
- US-A1- 2016 100 382
- LG ELECTRONICS: "PUSCH transmission in LAA", 3GPP DRAFT; R1-160625 LAA PUSCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. St Julian's, Malta; 20160215 - 20160219 14 February 2016 (2016-02-14), XP051053954, Retrieved from the Internet: URL:http://www.3gpp.org/ftp/Meetings_3GPP_ SYNC/RAN1/Docs/ [retrieved on 2016-02-14]
- SHARP: 'DCI Design for Multiple-subframe Scheduling for LAA UL' R1-164992, 3 GPP TSG RAN WG 1 MEETING #85 14 May 2016, XP051089887
- 'On the DCI Design for Multi-subframe Scheduling' R1-164127, 3GPP TSG RAN WG1 MEETING #85 14 May 2016, XP051090089

## Description

### TECHNICAL FIELD

The following description relates to a wireless communication system, and more particularly, to a method of receiving an uplink channel by a base station in a wireless communication system supportive of an unlicensed band.

Particularly, the following description relates to a following method and apparatuses supporting the same. First of all, one or more user equipments multiplex and transmit an uplink control channel and an uplink data channel in a single unit time (e.g., subframe, slot, etc.) multiplex in a wireless communication system supportive of an unlicensed band. Secondly, a base station receives the uplink control channel and the uplink data channel correspondingly.

### BACKGROUND ART

Wireless access systems have been widely deployed to provide various types of communication services such as voice or data. In general, a wireless access system is a multiple access system that supports communication of multiple users by sharing available system resources (a bandwidth, transmission power, etc.) among them. For example, multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, and a Single Carrier Frequency Division Multiple Access (SC-FDMA) system.

As a number of communication devices have required higher communication capacity, the necessity of the mobile broadband communication much improved than the existing radio access technology (RAT) has increased. In addition, massive machine type communications (MTC) capable of providing various services at anytime and anywhere by connecting a number of devices or things to each other has been considered in the next generation communication system. Moreover, a communication system design capable of supporting services/UEs sensitive to reliability and latency has been discussed.

As described above, the introduction of the next generation RAT considering the enhanced mobile broadband communication, massive MTC, Ultra-reliable and low latency communication (URLLC), and the like has been discussed.

WO 2016/036219 A1 relates to signal transmission and reception on unlicensed band in a wireless communication system. LG Electronics: "PUSCH transmission in LAA", 3GPP Draft, R1-160625, vol. RAN WG1 , St Julian's, Malta, 20160215 - 20160219, relates to PUSCH transmission in LAA SCell.

### DISCLOSURE OF THE INVENTION

### TECHNICAL TASK

One technical task of the present invention is to provide a method of transmitting and receiving uplink channels in a wireless communication system supportive of an unlicensed band and apparatus therefor.

Particularly, the technical task of the present invention is to provide a method of efficiently multiplexing uplink channels in an NR system operating on an unlicensed band, method of transmitting/receiving uplink channels based thereon, and apparatus therefor.

### TECHNICAL SOLUTIONS

The invention is set out in the appended set of claims.

### ADVANTAGEOUS EFFECTS

As is apparent from the above description, the embodiments of the present invention have the following effects.

According to the present invention, uplink channels can be efficiently multiplexed and transmitted/received in an NR system operating on an unlicensed band.

And, in aspect of a user equipment, uplink channel transmission can be performed on an unlicensed band in a manner of performing a channel access procedure more efficiently.

Moreover, in aspect of a base station, uplink channel reception can be performed on a more efficient unlicensed band by minimizing a resource wasted for a UE's channel access procedure.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

### DESCRIPTION OF DRAWINGS

The accompanying drawings, which are included to provide a further understanding of the invention, provide embodiments of the present invention together with detail explanation. Yet, a technical characteristic of the present invention is not limited to a specific drawing. Reference numerals in each drawing correspond to structural elements.

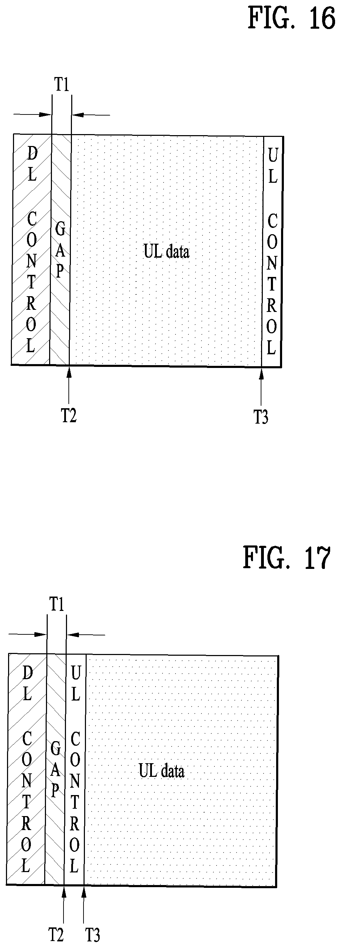

The claimed embodiment is shown in figure 17.
FIG. 1 is a diagram illustrating physical channels and a signal transmission method using the physical channels.
FIG. 2 is a diagram illustrating exemplary radio frame structures.
FIG. 3 is a diagram illustrating an exemplary resource grid for the duration of a downlink slot.
FIG. 4 is a diagram illustrating an exemplary structure of an uplink subframe.
FIG. 5 is a diagram illustrating an exemplary structure of a downlink subframe.
FIG. 6 is a diagram illustrating an exemplary carrier aggregation (CA) environment supported in a long term evolution-unlicensed (LTE-U) system.
FIG. 7 is a diagram illustrating an exemplary frame based equipment (FBE) operation as one of listen-before-talk (LBT) operations.
FIG. 8 is a block diagram illustrating the FBE operation.
FIG. 9 is a diagram illustrating an exemplary load based equipment (LBE) operation as one of the LBT operations.
FIG. 10 is a diagram illustrating methods of transmitting a discovery reference signal (DRS) supported in a licensed assisted access (LAA) system.
FIG. 11 is a diagram illustrating a channel access procedure (CAP) and contention window adjustment (CWA).
FIG. 12 is a diagram illustrating a partial transmission time interval (TTI) or a partial subframe, which is applicable to the present invention.
FIG. 13 is a diagram illustrating a self-contained subframe structure applicable to the present invention.
FIGS. 14 and 15 are diagrams illustrating representative methods for connecting TXRUs to antenna elements.
FIG. 16 is a diagram schematically showing a frame structure according to one example of the present invention.
FIG. 17 is a diagram showing an applicable frame structure according to one example of the present invention.
FIG. 18 is a diagram showing an applicable frame structure according to another example of the present invention.
FIG. 19 is a diagram showing an applicable frame structure according to further example of the present invention.
FIG. 20 is a diagram showing an applicable frame structure according to another further example of the present invention.
FIG. 21 is a diagram showing configuration of a user equipment and base station for implementing the proposed embodiments.

### BEST MODE FOR INVENTION

The embodiments of the present disclosure described below are combinations of elements and features of the present disclosure in specific forms. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.

In the description of the attached drawings, a detailed description of known procedures or steps of the present disclosure will be avoided lest it should obscure the subject matter of the present disclosure. In addition, procedures or steps that could be understood to those skilled in the art will not be described either.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a Base Station (BS) and a User Equipment (UE). A BS refers to a terminal node of a network, which directly communicates with a UE. A specific operation described as being performed by the BS may be performed by an upper node of the BS.

Namely, it is apparent that, in a network comprised of a plurality of network nodes including a BS, various operations performed for communication with a UE may be performed by the BS, or network nodes other than the BS. The term 'BS' may be replaced with a fixed station, a Node B, an evolved Node B (eNode B or eNB), an Advanced Base Station (ABS), an access point, etc.

In the embodiments of the present disclosure, the term terminal may be replaced with a UE, a Mobile Station (MS), a Subscriber Station (SS), a Mobile Subscriber Station (MSS), a mobile terminal, an Advanced Mobile Station (AMS), etc.

A transmission end is a fixed and/or mobile node that provides a data service or a voice service and a reception end is a fixed and/or mobile node that receives a data service or a voice service. Therefore, a UE may serve as a transmission end and a BS may serve as a reception end, on an UpLink (UL). Likewise, the UE may serve as a reception end and the BS may serve as a transmission end, on a DownLink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, and a 3GPP2 system. In particular, the embodiments of the present disclosure may be supported by the standard specifications, 3GPP TS 36.211, 3GPP TS 36.212, 3GPP TS 36.213, 3GPP TS 36.321 and 3GPP TS 36.331. That is, the steps or parts, which are not described to clearly reveal the technical idea of the present disclosure, in the embodiments of the present disclosure may be explained by the above standard specifications. All terms used in the embodiments of the present disclosure may be explained by the standard specifications.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

For example, the term, TxOP may be used interchangeably with transmission period or Reserved Resource Period (RRP) in the same sense. Further, a Listen-Before-Talk (LBT) procedure may be performed for the same purpose as a carrier sensing procedure for determining whether a channel state is idle or busy, CCA (Clear Channel Assessment), CAP (Channel Access Procedure).

Hereinafter, 3GPP LTE/LTE-A systems are explained, which are examples of wireless access systems.

The embodiments of the present disclosure can be applied to various wireless access systems such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA), etc.

CDMA may be implemented as a radio technology such as Universal Terrestrial Radio Access (UTRA) or CDMA2000. TDMA may be implemented as a radio technology such as Global System for Mobile communications (GSM)/General packet Radio Service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, Evolved UTRA (E-UTRA), etc.

UTRA is a part of Universal Mobile Telecommunications System (UMTS). 3GPP LTE is a part of Evolved UMTS (E-UMTS) using E-UTRA, adopting OFDMA for DL and SC-FDMA for UL. LTE-Advanced (LTE-A) is an evolution of 3GPP LTE. While the embodiments of the present disclosure are described in the context of a 3GPP LTE/LTE-A system in order to clarify the technical features of the present disclosure, the present disclosure is also applicable to an IEEE 802. 16e/m system, etc.

### 1. 3GPP LTE/LTE-A System

### 1.1. Physical Channels & Signal Transceiving Method Using The Same

In a wireless access system, a UE receives information from an eNB on a DL and transmits information to the eNB on a UL. The information transmitted and received between the UE and the eNB includes general data information and various types of control information. There are many physical channels according to the types/usages of information transmitted and received between the eNB and the UE.

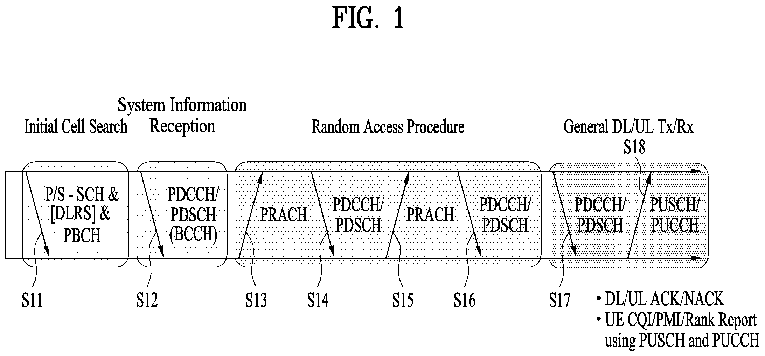

FIG. 1 illustrates physical channels and a general signal transmission method using the physical channels, which may be used in embodiments of the present disclosure.

When a UE is powered on or enters a new cell, the UE performs initial cell search (S11). The initial cell search involves acquisition of synchronization to an eNB. Specifically, the UE synchronizes its timing to the eNB and acquires information such as a cell Identifier (ID) by receiving a Primary Synchronization Channel (P-SCH) and a Secondary Synchronization Channel (S-SCH) from the eNB.

Then the UE may acquire information broadcast in the cell by receiving a Physical Broadcast Channel (PBCH) from the eNB.

During the initial cell search, the UE may monitor a DL channel state by receiving a Downlink Reference Signal (DL RS).

After the initial cell search, the UE may acquire more detailed system information by receiving a Physical Downlink Control Channel (PDCCH) and receiving a Physical Downlink Shared Channel (PDSCH) based on information of the PDCCH (S12).

To complete connection to the eNB, the UE may perform a random access procedure with the eNB (S13 to S16). In the random access procedure, the UE may transmit a preamble on a Physical Random Access Channel (PRACH) (S13) and may receive a PDCCH and a PDSCH associated with the PDCCH (S14). In the case of contention-based random access, the UE may additionally perform a contention resolution procedure including transmission of an additional PRACH (S15) and reception of a PDCCH signal and a PDSCH signal corresponding to the PDCCH signal (S16).

After the above procedure, the UE may receive a PDCCH and/or a PDSCH from the eNB (S17) and transmit a Physical Uplink Shared Channel (PUSCH) and/or a Physical Uplink Control Channel (PUCCH) to the eNB (S18), in a general UL/DL signal transmission procedure.

Control information that the UE transmits to the eNB is generically called Uplink Control Information (UCI). The UCI includes a Hybrid Automatic Repeat and reQuest Acknowledgement/Negative Acknowledgement (HARQ-ACK/NACK), a Scheduling Request (SR), a Channel Quality Indicator (CQI), a Precoding Matrix Index (PMI), a Rank Indicator (RI), etc.

In the LTE system, UCI is generally transmitted on a PUCCH periodically. However, if control information and traffic data should be transmitted simultaneously, the control information and traffic data may be transmitted on a PUSCH. In addition, the UCI may be transmitted aperiodically on the PUSCH, upon receipt of a request/command from a network.

### 1.2. Resource Structure

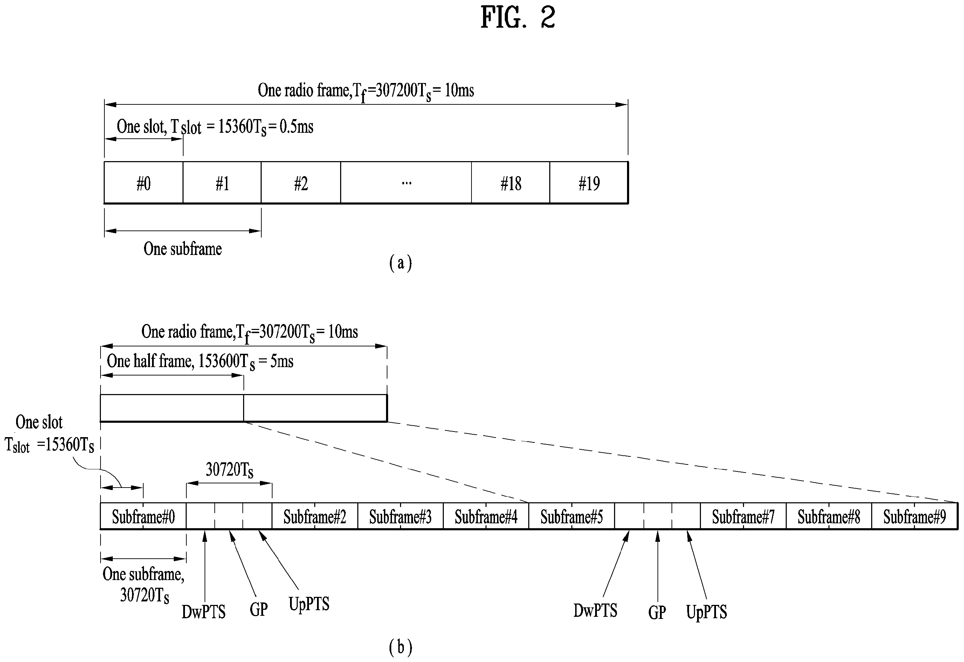

FIG. 2 illustrates exemplary radio frame structures used in embodiments of the present disclosure.

FIG. 2(a) illustrates frame structure type 1. Frame structure type 1 is applicable to both a full Frequency Division Duplex (FDD) system and a half FDD system.

One radio frame is 10ms (Tf=307200-Ts) long, including equal-sized 20 slots indexed from 0 to 19. Each slot is 0.5ms (Tslot=15360·Ts) long. One subframe includes two successive slots. An ith subframe includes 2ith and (2i+1)th slots. That is, a radio frame includes 10 subframes. A time required for transmitting one subframe is defined as a Transmission Time Interval (TTI). Ts is a sampling time given as Ts=1/(15kHz×2048)=3.2552×10-8 (about 33ns). One slot includes a plurality of Orthogonal Frequency Division Multiplexing (OFDM) symbols or SC-FDMA symbols in the time domain by a plurality of Resource Blocks (RBs) in the frequency domain.

A slot includes a plurality of OFDM symbols in the time domain. Since OFDMA is adopted for DL in the 3GPP LTE system, one OFDM symbol represents one symbol period. An OFDM symbol may be called an SC-FDMA symbol or symbol period. An RB is a resource allocation unit including a plurality of contiguous subcarriers in one slot.

In a full FDD system, each of 10 subframes may be used simultaneously for DL transmission and UL transmission during a 10-ms duration. The DL transmission and the UL transmission are distinguished by frequency. On the other hand, a UE cannot perform transmission and reception simultaneously in a half FDD system.

The above radio frame structure is purely exemplary. Thus, the number of subframes in a radio frame, the number of slots in a subframe, and the number of OFDM symbols in a slot may be changed.

FIG. 2(b) illustrates frame structure type 2. Frame structure type 2 is applied to a Time Division Duplex (TDD) system. One radio frame is 10ms (Tf=307200·Ts) long, including two half-frames each having a length of 5ms (=153600·Ts) long. Each half-frame includes five subframes each being 1ms (=30720·Ts) long. An ith subframe includes 2ith and (2i+1)th slots each having a length of 0.5ms (Tslot=15360·Ts). Ts is a sampling time given as Ts=1/(15kHzx2048)=3.2552x10-8 (about 33ns).

A type-2 frame includes a special subframe having three fields, Downlink Pilot Time Slot (DwPTS), Guard Period (GP), and Uplink Pilot Time Slot (UpPTS). The DwPTS is used for initial cell search, synchronization, or channel estimation at a UE, and the UpPTS is used for channel estimation and UL transmission synchronization with a UE at an eNB. The GP is used to cancel UL interference between a UL and a DL, caused by the multi-path delay of a DL signal.

Table 1 below lists special subframe configurations (DwPTS/GP/UpPTS lengths).

**[Table 1]**

| **Special subframe configuration** | **Normal cyclic prefix in downlink** | | | **Extended cyclic prefix in downlink** | | |
|---|---|---|---|---|---|---|
| | **DwPTS** | **UpPTS** | | **DwPTS** | **UpPTS** | |
| | | **Normal cyclic prefix in uplink** | **Extended cyclic prefix in uplink** | | **Normal cyclic prefix in uplink** | **Extended cyclic prefix in uplink** |
| 0 | 6592 *T*ₛ | 2192·*T*ₛ | 2560 *Tₛ* | 7680·*Tₛ* | 2192·*T*ₛ | 2560·*Tₛ* |
| 1 | 19760·*T*ₛ | | | 20480·*Tₛ* | | |
| 2 | 21952·*Tₛ* | | | 23040·*Tₛ* | | |
| 3 | 24144·*T*ₛ | | | 25600·*Tₛ* | | |
| 4 | 26336·*Tₛ* | | | 7680·*T*ₛ | 4384·*T*ₛ | 5120·*T*ₛ |
| 5 | 6592·*T*ₛ | 4384·*T*ₛ, | 5120·*Tₛ*, | 20480·*T*ₛ | | |
| 6 | 19760·*T*ₛ | | | 23040·*Tₛ* | | |
| 7 | 21952·*T*ₛ | | | - | - | - |
| 8 | 24144·*T*ₛ | | | - | - | - |

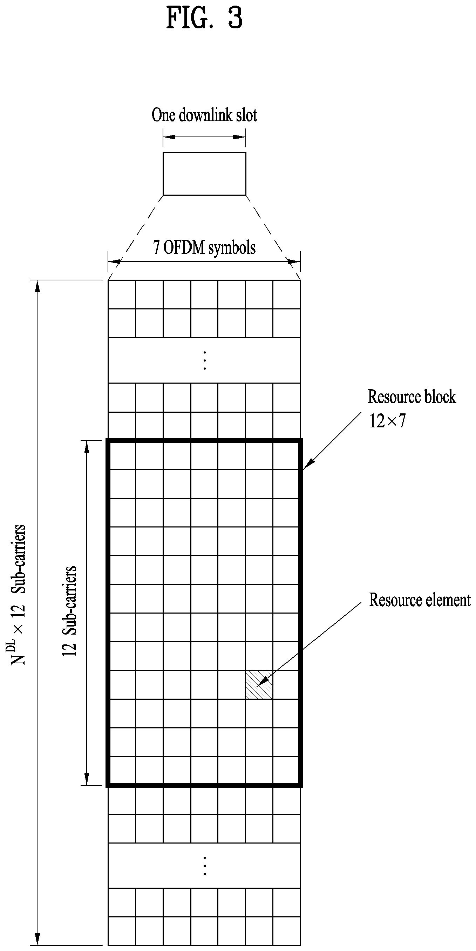

FIG. 3 illustrates an exemplary structure of a DL resource grid for the duration of one DL slot, which may be used in embodiments of the present disclosure.

Referring to FIG. 3, a DL slot includes a plurality of OFDM symbols in the time domain. One DL slot includes 7 OFDM symbols in the time domain and an RB includes 12 subcarriers in the frequency domain, to which the present disclosure is not limited.

Each element of the resource grid is referred to as a Resource Element (RE). An RB includes 12x7 REs. The number of RBs in a DL slot, NDL depends on a DL transmission bandwidth. The structure of the uplink slot may be the same as the structure of the downlink slot.

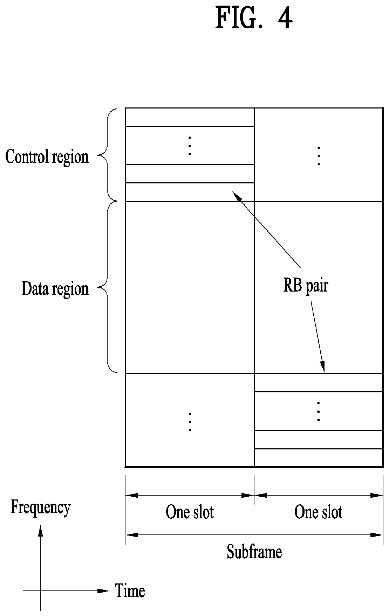

FIG. 4 illustrates a structure of a UL subframe which may be used in embodiments of the present disclosure.

Referring to FIG. 4, a UL subframe may be divided into a control region and a data region in the frequency domain. A PUCCH carrying UCI is allocated to the control region and a PUSCH carrying user data is allocated to the data region. To maintain a single carrier property, a LTE does not transmit a PUCCH and a PUSCH simultaneously. A pair of RBs in a subframe are allocated to a PUCCH for a UE. The RBs of the RB pair occupy different subcarriers in two slots. Thus it is said that the RB pair frequency-hops over a slot boundary.

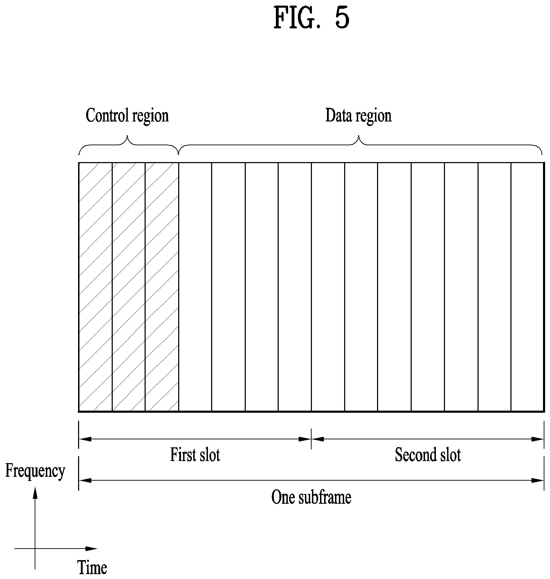

FIG. 5 illustrates a structure of a DL subframe that may be used in embodiments of the present disclosure.

Referring to FIG. 5, up to three OFDM symbols of a DL subframe, starting from OFDM symbol 0 are used as a control region to which control channels are allocated and the other OFDM symbols of the DL subframe are used as a data region to which a PDSCH is allocated. DL control channels defined for the 3GPP LTE system include a Physical Control Format Indicator Channel (PCFICH), a PDCCH, and a Physical Hybrid ARQ Indicator Channel (PHICH).

The PCFICH is transmitted in the first OFDM symbol of a subframe, carrying information about the number of OFDM symbols used for transmission of control channels (i.e., the size of the control region) in the subframe. The PHICH is a response channel to a UL transmission, delivering an HARQ ACK/NACK signal. Control information carried on the PDCCH is called Downlink Control Information (DCI). The DCI transports UL resource assignment information, DL resource assignment information, or UL Transmission (Tx) power control commands for a UE group.

### 1.3. CSI Feedback

In the 3GPP LTE or LTE-A system, user equipment (UE) has been defined to report channel state information (CSI) to a base station (BS or eNB). Herein, the CSI refers to information indicating the quality of a radio channel (or link) formed between the UE and an antenna port.

For example, the CSI may include a rank indicator (RI), a precoding matrix indicator (PMI), and a channel quality indicator (CQI).

Here, RI denotes rank information about the corresponding channel, which means the number of streams that the UE receives through the same time-frequency resource. This value is determined depending on the channel's Long Term Fading. Subsequently, the RI may be fed back to the BS by the UE, usually at a longer periodic interval than the PMI or CQI.

The PMI is a value reflecting the characteristics of a channel space and indicates a precoding index preferred by the UE based on a metric such as SINR.

The CQI is a value indicating the strength of a channel, and generally refers to a reception SINR that can be obtained when the BS uses the PMI.

In the 3GPP LTE or LTE-A system, the base station may set a plurality of CSI processes for the UE, and receive a report of the CSI for each process from the UE. Here, the CSI process is configured with a CSI-RS for specifying signal quality from the base station and a CSI-interference measurement (CSI-IM) resource for interference measurement.

### 1.4. RRM Measurement

The LTE system supports Radio Resource Management (RRM) operations including power control, scheduling, cell search, cell reselection, handover, radio link or connection monitoring, connection establish/re-establish, etc. Here, a serving cell may make a request for RRM measurement information that is a measurement value for performing an RRM operation to a User Equipment (UE). As representative information, a UE in the LTE system can measure and report cell search information on each cell, Reference Signal Received Power (RSRP) information, Reference Signal Received Quality (RSRQ) information and the like. Particularly, the UE in the LTE system may receive 'measConfig' through a higher layer signal for RRM measurement from the serving cell and then measure RSRP or RSRQ according to the information of 'measConfig'.

Here, RSRP, RSRQ and RSSI defined in the LTE system can be defined as follows.

First of all, Reference Signal Received Power (RSRP) is defined as the linear average over the power contributions (in [W]) of the resource elements that carry cell-specific reference signals within the considered measurement frequency bandwidth. For example, for RSRP determination the cell-specific reference signals R₀ shall be used. If the UE can reliably detect that Ri is available it may use Ri in addition to R₀ to determine RSRP.)

A reference point for the RSRP shall be the antenna connector of the UE.

If receiver diversity is in use by the UE, the reported value shall not be lower than the corresponding RSRP of any of the individual diversity branches.

Subsequently, Reference Signal Received Quality (RSRQ) is defined as the ratio N×RSRP/(E-UTRA carrier RSSI), where N is the number of RB's of the E-UTRA carrier RSSI measurement bandwidth. The measurements in the numerator and denominator shall be made over the same set of resource blocks.

E-UTRA Carrier Received Signal Strength Indicator (RSSI) includes the linear average of the total received power (in [W]) observed only in OFDM symbols containing reference symbols for antenna port 0, in the measurement bandwidth, over N number of resource blocks by the UE from all sources, including co-channel serving and non-serving cells, adjacent channel interference, thermal noise etc. If higher layer signaling indicates certain subframes for performing RSRQ measurements, then RSSI is measured over all OFDM symbols in the indicated subframes.

The reference point for the RSRQ shall be the antenna connector of the UE.

If receiver diversity is in use by the UE, the reported value shall not be lower than the corresponding RSRQ of any of the individual diversity branches.

Subsequently, Received Signal Strength Indicator (RSSI) is defined as the received wide band power, including thermal noise and noise generated in the receiver, within the bandwidth defined by the receiver pulse shaping filter.

The reference point for the measurement shall be the antenna connector of the UE.

If receiver diversity is in use by the UE, the reported value shall not be lower than the corresponding UTRA carrier RSSI of any of the individual receive antenna branches.

According to the above-described definitions, in case of intra-frequency measurement, a UE operating in the LTE system can measure RSRP on a bandwidth indicated through Information Element (IE) relevant to an allowed measurement bandwidth transmitted on System Information Block type 3 (SIB3). Or, in case of inter-frequency measurement, the UE can measure RSRP on a bandwidth corresponding to one of 6, 15, 25, 50, 75, and 100 Resource Blocks (RBs) indicated through an allowed measurement bandwidth transmitted on SIBS. Or, if the above-described IE does not exist, the UE can measure RSRP on a frequency bandwidth of an entire Downlink (DL) system as a default operation.

In doing so, in case of receiving information on an allowed measurement bandwidth, the UE may consider the corresponding value a maximum measurement bandwidth and measure a value of RSRP freely within the corresponding value. Yet, if the serving cell transmits IE defined as WB-RSRQ to the UE and sets the allowed measurement bandwidth to a value equal to or greater than 50 RB, the UE should calculate an RSRP value for the entire allowed measurement bandwidth. Meanwhile, in case of measuring RSSI, the UE measures the RSSI using a frequency band of a receiver of the UE according to the definition of an RSSI bandwidth.

### 2. LTE-U system

### 2.1 LTE-U System Configuration

Hereinafter, methods for transmitting and receiving data in a CA environment of an LTE-A band corresponding to a licensed band and an unlicensed band will be described. In the embodiments of the present disclosure, an LTE-U system means an LTE system that supports such a CA status of a licensed band and an unlicensed band. A WiFi band or Bluetooth (BT) band may be used as the unlicensed band. LTE-A system operating on an unlicensed band is referred to as LAA (Licensed Assisted Access) and the LAA may correspond to a scheme of performing data transmission/reception in an unlicensed band using a combination with a licensed band.

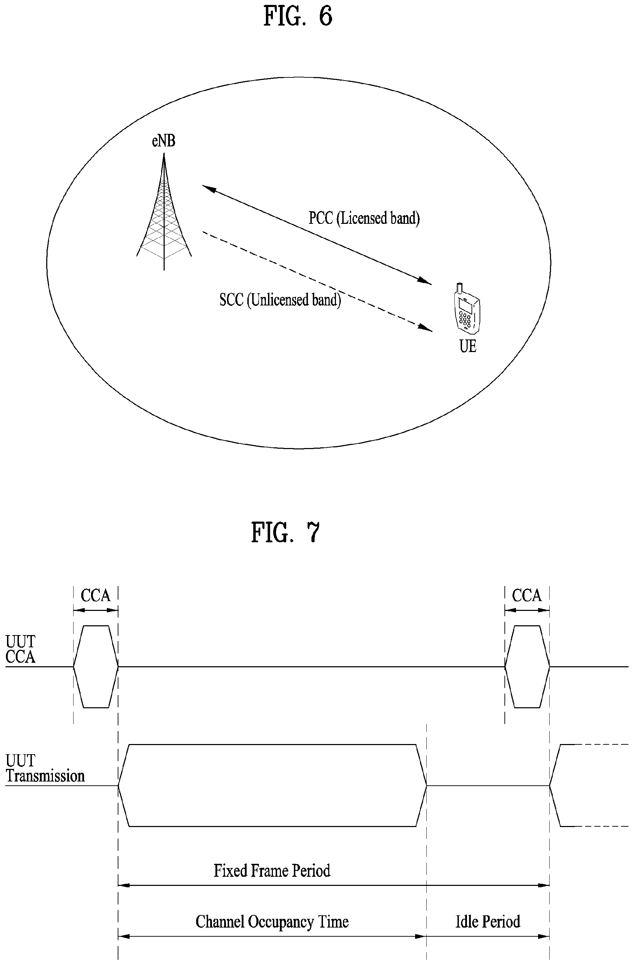

FIG. 6 illustrates an example of a CA environment supported in an LTE-U system.

Hereinafter, for convenience of description, it is assumed that a UE is configured to perform wireless communication in each of a licensed band and an unlicensed band by using two CCs. The methods which will be described hereinafter may be applied to even a case where three or more CCs are configured for a UE.

In the embodiments of the present disclosure, it is assumed that a carrier of the licensed band may be a primary CC (PCC or PCell), and a carrier of the unlicensed band may be a secondary CC (SCC or SCell). However, the embodiments of the present disclosure may be applied to even a case where a plurality of licensed bands and a plurality of unlicensed bands are used in a carrier aggregation method. Also, the methods suggested in the present disclosure may be applied to even a 3GPP LTE system and another system.

In FIG. 6, one eNB supports both a licensed band and an unlicensed band. That is, the UE may transmit and receive control information and data through the PCC which is a licensed band, and may also transmit and receive control information and data through the SCC which is an unlicensed band. However, the status shown in FIG. 6 is only example, and the embodiments of the present disclosure may be applied to even a CA environment that one UE accesses a plurality of eNBs.

For example, the UE may configure a macro eNB (M-eNB) and a PCell, and may configure a small eNB (S-eNB) and an SCell. At this time, the macro eNB and the small eNB may be connected with each other through a backhaul network.

In the embodiments of the present disclosure, the unlicensed band may be operated in a contention-based random access method. At this time, the eNB that supports the unlicensed band may perform a Carrier Sensing (CS) procedure prior to data transmission and reception. The CS procedure determines whether a corresponding band is reserved by another entity.

For example, the eNB of the SCell checks whether a current channel is busy or idle. If it is determined that the corresponding band is idle state, the eNB may transmit a scheduling grant to the UE to allocate a resource through (E)PDCCH of the PCell in case of a cross carrier scheduling mode and through PDCCH of the SCell in case of a selfscheduling mode, and may try data transmission and reception.

At this time, the eNB may configure a TxOP including N consecutive subframes. In this case, a value of N and a use of the N subframes may previously be notified from the eNB to the UE through higher layer signaling through the PCell or through a physical control channel or physical data channel.

### 2.2 Carrier Sensing (CS) Procedure

In embodiments of the present disclosure, a CS procedure may be called a Clear Channel Assessment (CCA) procedure. In the CCA procedure, it may be determined whether a channel is busy or idle based on a predetermined CCA threshold or a CCA threshold configured by higher-layer signaling. For example, if energy higher than the CCA threshold is detected in an unlicensed band, SCell, it may be determined that the channel is busy or idle. If the channel is determined to be idle, an eNB may start signal transmission in the SCell. This procedure may be referred to as LBT.

FIG. 7 is a view illustrating an exemplary Frame Based Equipment (FBE) operation as one of LBT operations.

The European Telecommunication Standards Institute (ETSI) regulation (EN 301 893 V1.7.1) defines two LBT operations, Frame Based Equipment (FBE) and Load Based Equipment (LBE). In FBE, one fixed frame is comprised of a channel occupancy time (e.g., 1 to 10ms) being a time period during which a communication node succeeding in channel access may continue transmission, and an idle period being at least 5% of the channel occupancy time, and CCA is defined as an operation for monitoring a channel during a CCA slot (at least 20µs) at the end of the idle period.

A communication node periodically performs CCA on a per-fixed frame basis. If the channel is unoccupied, the communication node transmits data during the channel occupancy time. On the contrary, if the channel is occupied, the communication node defers the transmission and waits until the CCA slot of the next period.

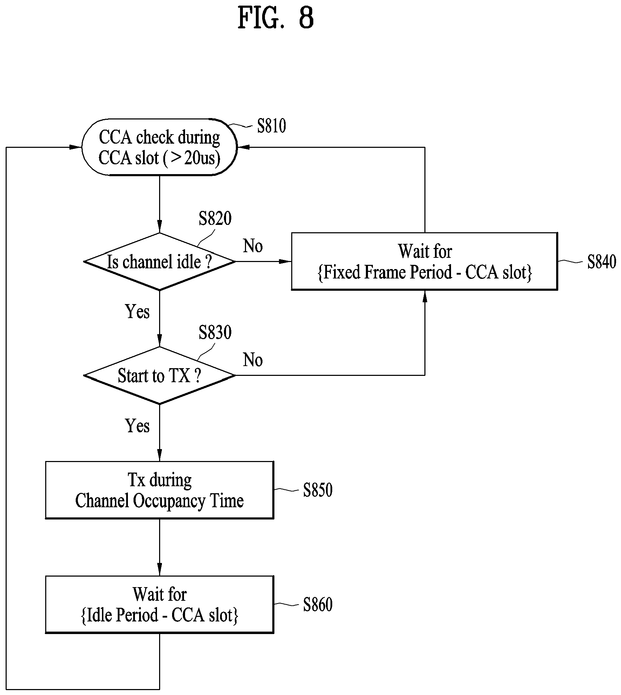

FIG. 8 is a block diagram illustrating the FBE operation.

Referring to FIG. 8, a communication node (i.e., eNB) managing an SCell performs CCA during a CCA slot [S810]. If the channel is idle [S820], the communication node performs data transmission (Tx) [S830]. If the channel is busy, the communication node waits for a time period calculated by subtracting the CCA slot from a fixed frame period, and then resumes CCA [S840].

The communication node transmits data during the channel occupancy time [S850]. Upon completion of the data transmission, the communication node waits for a time period calculated by subtracting the CCA slot from the idle period [S860], and then resumes CCA [S810]. If the channel is idle but the communication node has no transmission data, the communication node waits for the time period calculated by subtracting the CCA slot from the fixed frame period [S840], and then resumes CCA [S810].

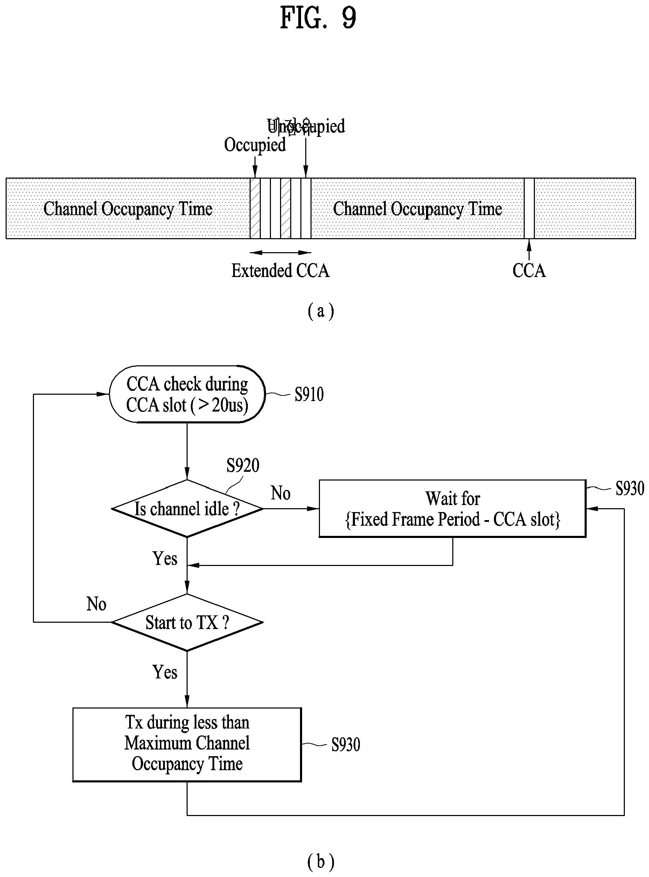

FIG. 9 is a view illustrating an exemplary LBE operation as one of the LBT operations.

Referring to FIG. 9(a), in LBE, the communication node first sets q (q ∈ {4, 5, ..., 32}) and then performs CCA during one CCA slot.

FIG. 9(b) is a block diagram illustrating the LBE operation. The LBE operation will be described with reference to FIG. 9(b).

The communication node may perform CCA during a CCA slot [S910]. If the channel is unoccupied in a first CCA slot [S920], the communication node may transmit data by securing a time period of up to (13/32)q ms [S930].

On the contrary, if the channel is occupied in the first CCA slot, the communication node selects N (N ∈ {1, 2, ..., q}) arbitrarily (i.e., randomly) and stores the selected N value as an initial count. Then, the communication node senses a channel state on a CCA slot basis. Each time the channel is unoccupied in one specific CCA slot, the communication node decrements the count by 1. If the count is 0, the communication node may transmit data by securing a time period of up to (13/32)q ms [S940].

### 2.3 Discontinuous Transmission in DL

When discontinuous transmission is performed on an unlicensed carrier having a limited maximum transmission period, the discontinuous transmission may influence on several functions necessary for performing an operation of LTE system. The several functions can be supported by one or more signals transmitted at a starting part of discontinuous LAA DL transmission. The functions supported by the signals include such a function as AGC configuration, channel reservation, and the like.

When a signal is transmitted by an LAA node, channel reservation has a meaning of transmitting signals via channels, which are occupied to transmit a signal to other nodes, after channel access is performed via a successful LBT operation.

The functions, which are supported by one or more signals necessary for performing an LAA operation including discontinuous DL transmission, include a function for detecting LAA DL transmission transmitted by a UE and a function for synchronizing frequency and time. In this case, the requirement of the functions does not mean that other available functions are excluded. The functions can be supported by other methods.

### 2.3.1 Time and Frequency Synchronization

A design target recommended by LAA system is to support a UE to make the UE obtain time and frequency synchronization via a discovery signal for measuring RRM (radio resource management) and each of reference signals included in DL transmission bursts, or a combination thereof. The discovery signal for measuring RRM transmitted from a serving cell can be used for obtaining coarse time or frequency synchronization.

### 2.3.2 DL Transmission Timing

When a DL LAA is designed, it may follow a CA timing relation between serving cells combined by CA, which is defined in LTE-A system (Rel-12 or earlier), for subframe boundary adjustment. Yet, it does not mean that a base station starts DL transmission only at a subframe boundary. Although all OFDM symbols are unavailable in a subframe, LAA system can support PDSCH transmission according to a result of an LBT operation. In this case, it is required to support transmission of control information necessary for performing the PDSCH transmission.

### 2.4 Measuring and Reporting RRM

LTE-A system can transmit a discovery signal at a start point for supporting RRM functions including a function for detecting a cell. In this case, the discovery signal can be referred to as a discovery reference signal (DRS). In order to support the RRM functions for LAA, the discovery signal of the LTE-A system and transmission/reception functions of the discovery signal can be applied in a manner of being changed.

### 2.4.1 Discovery Reference Signal (DRS)

A DRS of LTE-A system is designed to support on/off operations of a small cell. In this case, off small cells correspond to a state that most of functions are turned off except a periodic transmission of a DRS. DRSs are transmitted at a DRS transmission occasion with a period of 40, 80, or 160 ms. A DMTC (discovery measurement timing configuration) corresponds to a time period capable of anticipating a DRS received by a UE. The DRS transmission occasion may occur at any point in the DMTC. A UE can anticipate that a DRS is continuously transmitted from a cell allocated to the UE with a corresponding interval.

If a DRS of LTE-A system is used in LAA system, it may bring new constraints. For example, although transmission of a DRS such as a very short control transmission without LBT can be permitted in several regions, a short control transmission without LBT is not permitted in other several regions. Hence, a DRS transmission in the LAA system may become a target of LBT.

When a DRS is transmitted, if LBT is applied to the DRS, similar to a DRS transmitted in LTE-A system, the DRS may not be transmitted by a periodic scheme. In particular, it may consider two schemes described in the following to transmit a DRS in the LAA system.

As a first scheme, a DRS is transmitted at a fixed position only in a DMTC configured on the basis of a condition of LBT.

As a second scheme, a DRS transmission is permitted at one or more different time positions in a DMTC configured on the basis of a condition of LBT.

As a different aspect of the second scheme, the number of time positions can be restricted to one time position in a subframe. If it is more profitable, DRS transmission can be permitted at the outside of a configured DMTC as well as DRS transmission performed in the DMTC.

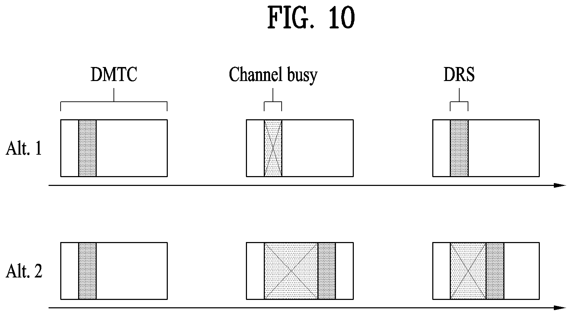

FIG. 10 is a diagram for explaining DRS transmission methods supported by LAA system.

Referring to FIG. 10, the upper part of FIG. 10 shows the aforementioned first scheme for transmitting a DRS and the bottom part of FIG. 10 shows the aforementioned second scheme for transmitting a DRS. In particular, in case of the first scheme, a UE can receive a DRS at a position determined in a DMTC period only. On the contrary, in case of the second scheme, a UE can receive a DRS at a random position in a DMTC period.

In LTE-A system, when a UE performs RRM measurement based on DRS transmission, the LTE can perform single RRM measurement based on a plurality of DRS occasions. In case of using a DRS in LAA system, due to the constraint of LBT, it is difficult to guarantee that the DRS is transmitted at a specific position. Even though a DRS is not actually transmitted from a base station, if a UE assumes that the DRS exists, quality of an RRM measurement result reported by the UE can be deteriorated. Hence, when LAA DRS is designed, it is necessary to permit the existence of a DRS to be detected in a single DRS occasion. By doing so, it may be able to make the UE combine the existence of the DRS with RRM measurement, which is performed on successfully detected DRS occasions only.

Signals including a DRS do not guarantee DRS transmissions adjacent in time. In particular, if there is no data transmission in subframes accompanied with a DRS, there may exist OFDM symbols in which a physical signal is not transmitted. While operating in an unlicensed band, other nodes may sense that a corresponding channel is in an idle state during a silence period between DRS transmissions. In order to avoid the abovementioned problem, it is preferable that transmission bursts including a DRS signal are configured by adjacent OFDM symbols in which several signals are transmitted.

### 2.5 Channel Access Procedure and Contention Window Adjustment Procedure

In the following, the aforementioned channel access procedure and the contention window adjustment procedure are explained in the aspect of a transmission node.

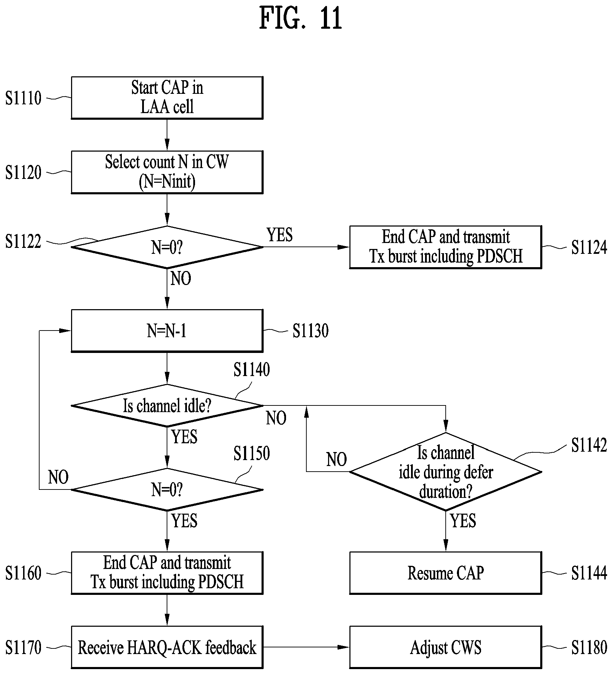

FIG. 11 is a flowchart for explaining CAP and CWA.

In order for an LTE transmission node (e.g., a base station) to operate in LAA Scell(s) corresponding to an unlicensed band cell for DL transmission, it may initiate a channel access procedure (CAP) [51110].

The base station can randomly select a back-off counter N from a contention window (CW). In this case, the N is configured by an initial value Ninit [S1120]. The Ninit is randomly selected from among values ranging from 0 to CWₚ.

Subsequently, if the back-off counter value (N) corresponds to 0 [S1122], the base station terminates the CAP and performs Tx burst transmission including PSCH [S1124]. On the contrary, if the back-off value is not 0, the base station reduces the back-off counter value by 1 [S1130].

The base station checks whether or not a channel of the LAA Scell(s) is in an idle state [S1140]. If the channel is in the idle state, the base station checks whether or not the back-off value corresponds to 0 [S1150]. The base station repeatedly checks whether or not the channel is in the idle state until the back-off value becomes 0 while reducing the back-off counter value by 1.

In the step S1 140, if the channel is not in the idle state i.e., if the channel is in a busy state, the base station checks whether or not the channel is in the idle state during a defer duration (more than 15 usec) longer than a slot duration (e.g., 9 usec) [S1142]. If the channel is in the idle state during the defer duration, the base station can resume the CAP [51144]. For example, when the back-off counter value Ninit corresponds to 10, if the channel state is determined as busy after the back-off counter value is reduced to 5, the base station senses the channel during the defer duration and determines whether or not the channel is in the idle state. In this case, if the channel is in the idle state during the defer duration, the base station performs the CAP again from the back-off counter value 5 (or, from the back-off counter value 4 by reducing the value by 1) rather than configures the back-off counter value Ninit. On the contrary, if the channel is in the busy state during the defer duration, the base station performs the step S1142 again to check whether or not the channel is in the idle state during a new defer duration.

Referring back to FIG. 11, the base station checks whether or not the backoff counter value (N) becomes 0 [S1150]. If the back-off counter value (N) becomes 0, the base station terminates the CAP and may be able to transmit a Tx burst including PDSCH.

The base station can receive HARQ-ACK information from a UE in response to the Tx burst [S1170]. The base station can adjust a CWS (contention window size) based on the HARQ-ACK information received from the UE [51180].

In the step S1180, as a method of adjusting the CWS, the base station can adjust the CWS based on HARQ-ACK information on a first subframe of a most recently transmitted Tx burst (i.e., a start subframe of the Tx burst).

In this case, the base station can set an initial CW to each priority class before the CWP is performed. Subsequently, if a probability that HARQ-ACK values corresponding to PDSCH transmitted in a reference subframe are determined as NACK is equal to or greater than 80 %, the base station increases CW values set to each priority class to a next higher priority.

In the step S1160, PDSCH can be assigned by a self-carrier scheduling scheme or a cross-carrier scheduling scheme. If the PDSCH is assigned by the self-carrier scheduling scheme, the base station counts DTX, NACK/DTX, or ANY state among the HARQ-ACK information fed back by the UE as NACK. If the PDSCH is assigned by the cross-carrier scheduling scheme, the base station counts the NACK/DTX and the ANY states as NACK and does not count the DTX state as NACK among the HARQ-ACK information fed back by the UE.

If bundling is performed over M (M >= 2) number of subframes and bundled HARQ-ACK information is received, the base station may consider the bundled HARQ-ACK information as M number of HARQ-ACK responses. In this case, it is preferable that a reference subframe is included in the M number of bundled subframes.

### 2.6. Channel Access Priory Class

**[Table 2]**

| **Channel Access Priority Class** (*p*) | *mₚ* | *CW*_{min,*p*} | *CW*_{max,*p*} | *T*_{*m* cot,*p*} | **allowed** *CWₚ* **sizes** |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127,255,511,1 023} |

As shown in Table 2, in Rel-13 LAA system, 4 channel access priority classes are defined in total. And, a length of a defer period, a CWS, MCOT (maximum channel occupancy time), and the like are defined according to each of the channel access priority classes. Hence, when an eNB transmits a downlink signal via an unlicensed band, the eNB performs random backoff by utilizing LBT parameters determined according to a channel access priority class and may be then able to access a channel during limited maximum transmission time only after the random backoff is completed.

For example, in case of the channel access priority class 1/2/3/4, the maximum channel occupancy time (MCOT) is determined by 2/3/8/8 ms. The maximum channel occupancy time (MCOT) is determined by 2/3/10/10 ms in environment where other RAT such as Wi-Fi does not exists (e.g., by level of regulation).

As shown in Table 2, a set of CWSs capable of being configured according to a class is defined. One of points different from Wi-Fi system is in that a different backoff counter value is not defined according to a channel access priority class and LBT is performed using a single backoff counter value (this is referred to as single engine LBT).

For example, when an eNB intends to access a channel via an LBT operation of class 3, since CWmin (= 15) is configured as an initial CWS, the eNB performs random backoff by randomly selecting an integer from among numbers ranging from 0 to 15. If a backoff counter value becomes 0, the eNB starts DL Tx and randomly selects a new backoff counter for a next Tx burst after the DL Tx burst is completed. In this case, if an event for increasing a CWS is triggered, the eNB increases a size of the CWS to 31 corresponding to a next size, randomly selects an integer from among numbers ranging from 0 to 31, and performs random backoff.

In this case, when a CWS of the class 3 is increased, CWSs of all classes are increased as well. In particular, if the CW of the class 3 becomes 31, a CWS of a class 1/2/4 becomes 7/15/31. If an event for decreasing a CWS is triggered, CWS values of all classes are initialized by CWmin irrespective of a CWS value of the triggering timing.

### 2.7. Subframe Structure Applicable to LAA System

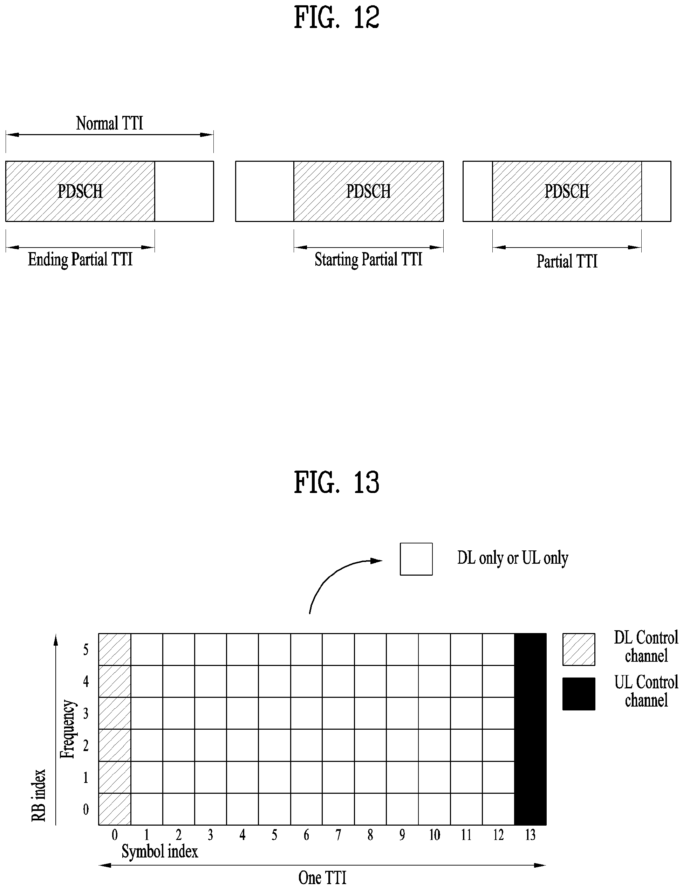

FIG. 12 is a diagram illustrating a partial TTI or a partial subframe applicable to the present invention.

In Rel-13 LAA system, MCOT is utilized as much as possible when DL Tx burst is transmitted. In order to support consecutive transmission, a partial TTI, which is defined as DwPTS, is introduced. The partial TTI (or partial subframe) corresponds to a section in which a signal is transmitted as much as a length shorter than a legacy TTI (e.g., 1ms) when PDSCH is transmitted.

In the present invention, for clarity, a starting partial TTI or a starting partial subframe corresponds to a form that a part of symbols positioned at the fore part of a subframe are emptied out. An ending partial TTI or an ending partial subframe corresponds to a form that a part of symbols positioned at the rear part of a subframe are emptied out. (On the contrary, an intact TTI is referred to as a normal TTI or a full TTI.)

FIG. 12 illustrates various types of the aforementioned partial TTI. The first drawing of FIG. 12 illustrates an ending partial TTI (or subframe) and the second drawing illustrates a starting partial TTI (or subframe). The third drawing of FIG. 12 illustrates a partial TTI (or subframe) that a part of symbols positioned at the fore part and the rear part of a subframe are emptied out. In this case, when signal transmission is excluded from a normal TTI, a time section during which the signal transmission is excluded is referred to as a transmission gap (TX gap).

Although the present invention is explained on the basis of a DL operation in FIG. 12, the present invention can also be identically applied to a LTL operation. For example, a partial TTI structure shown in FIG. 12 can be applied to a form of transmitting PUCCH or PUSCH as well.

### 3. New Radio Access Technology System

As more and more communication devices require greater communication capacity, there is a need for mobile broadband communication enhanced over existing radio access technology (RAT). In addition, massive Machine-Type Communications (MTC) capable of providing a variety of services anywhere and anytime by connecting multiple devices and objects is also considered. Communication system design considering services/UEs sensitive to reliability and latency is also under discussion.

As such, introduction of new radio access technology considering enhanced mobile broadband communication, massive MTC, and Ultra-Reliable and Low Latency Communication (URLLC) is being discussed. In the present invention, for simplicity, this technology will be referred to as NewRAT or NR (New Radio).

### 3.1. Self-Contained Subframe Structure

FIG. 13 is a diagram illustrating a self-contained subframe structure applicable to the present invention.

In the NR system to which the present invention is applicable, a self-contained subframe structure as shown in FIG. 13 is proposed in order to minimize data transmission latency in the TDD system.

In FIG. 13, the hatched region (e.g., symbol index = 0) represents a downlink control region, and the black region (e.g., symbol index = 13) represents an uplink control region. The other region (e.g., symbol index = 1 to 12) may be used for downlink data transmission or for uplink data transmission.

In this structure, DL transmission and UL transmission may be sequentially performed in one subframe. In addition, DL data may be transmitted and received in one subframe and UL ACK/NACK therefor may be transmitted and received in the same subframe. As a result, this structure may reduce time taken to retransmit data when a data transmission error occurs, thereby minimizing the latency of final data transmission.

In such a self-contained subframe structure, a time gap having a certain temporal length is required in order for the base station and the UE to switch from the transmission mode to the reception mode or from the reception mode to the transmission mode. To this end, some OFDM symbols at the time of switching from DL to UL in the self-contained subframe structure may be set as a guard period (GP).

While a case where the self-contained subframe structure includes both the DL control region and the UL control region has been described above, the control regions may be selectively included in the self-contained subframe structure. In other words, the self-contained subframe structure according to the present invention may include not only the case of including both the DL control region and the UL control region but also the case of including either the DL control region or the UL control region alone, as shown in FIG. 13.

For simplicity of explanation, the frame structure configured as above is referred to as a subframe, but this configuration can also be referred to as a frame or a slot. For example, in the NR system, one unit consisting of a plurality of symbols may be referred to as a slot. In the following description, a subframe or a frame may be replaced with the slot described above.

### 3.2. OFDM Numerology

The NR system uses the OFDM transmission scheme or a similar transmission scheme. Here, the NR system may typically have the OFDM numerology as shown in Table 3.

**[Table 3]**

| **Parameter** | **Value** |
|---|---|
| **Subcarrier-spacing** ( ^{Δ*f*} ) | 75kHz |
| **OFDM symbol length** | 13.33us |
| **Cyclic Prefix(CP) length** | 1.04us/0.94us |
| **System BW** | 100MHz |
| **No. of available subcarriers** | 1200 |
| **Subframe length** | 0.2ms |
| **Number of OFDM symbol per Subframe** | 14 symbols |

Alternatively, the NR system may use the OFDM transmission scheme or a similar transmission scheme, and may use an OFDM numerology selected from among multiple OFDM numerologies as shown in Table 4. Specifically, as disclosed in Table 4, the NR system may take the 15 kHz subcarrier-spacing used in the LTE system as a base, and use an OFDM numerology having subcarrier-spacing of 30, 60, and 120 kHz, which are multiples of the 15 kHz subcarrier-spacing.

In this case, the cyclic prefix, the system bandwidth (BW) and the number of available subcarriers disclosed in Table 4 are merely an example that is applicable to the NR system according to the present invention, and the values thereof may depend on the implementation method. Typically, for the 60 kHz subcarrier-spacing, the system bandwidth may be set to 100 MHz. In this case, the number of available subcarriers may be greater than 1500 and less than 1666. Also, the subframe length and the number of OFDM symbols per subframe disclosed in Table 4 are merely an example that is applicable to the NR system according to the present invention, and the values thereof may depend on the implementation method.

**[Table 4]**

| **Parameter** | **Value** | **Value** | **Value** | **Value** |
|---|---|---|---|---|
| **Subcarrier-spacing** (Δ*f*) | 15kHz | 30kHz | 60kHz | 120kHz |
| **OFDM symbol length** | 66.66 | 33.33 | 16.66 | 8.33 |
| **Cyclic Prefix(CP) length** | 5.20us/4.69us | 2.60us/2.34us | 1.30us/1.17us | 0.65us/0.59us |
| **System BW** | 20MHz | 40MHz | 80MHz | 160MHz |
| **No. of available subcarriers** | 1200 | 1200 | 1200 | 1200 |
| **Subframe length** | 1ms | 0.5ms | 0.25ms | 0.125ms |
| **Number of OFDM symbol per Subframe** | 14 symbols | 14 symbols | 14 symbols | 14 symbols |

### 3.3. Analog Beamforming

In a millimeter wave (mmW) system, since a wavelength is short, a plurality of antenna elements can be installed in the same area. That is, considering that the wavelength at 30 GHz band is 1 cm, a total of 100 antenna elements can be installed in a 5 * 5 cm panel at intervals of 0.5 lambda (wavelength) in the case of a 2-dimensional array. Therefore, in the mmW system, it is possible to improve the coverage or throughput by increasing the beamforming (BF) gain using multiple antenna elements.

In this case, each antenna element can include a transceiver unit (TXRU) to enable adjustment of transmit power and phase per antenna element. By doing so, each antenna element can perform independent beamforming per frequency resource.

However, installing TXRUs in all of the about 100 antenna elements is less feasible in terms of cost. Therefore, a method of mapping a plurality of antenna elements to one TXRU and adjusting the direction of a beam using an analog phase shifter has been considered. However, this method is disadvantageous in that frequency selective beamforming is impossible because only one beam direction is generated over the full band.

To solve this problem, as an intermediate form of digital BF and analog BF, hybrid BF with B TXRUs that are fewer than Q antenna elements can be considered. In the case of the hybrid BF, the number of beam directions that can be transmitted at the same time is limited to B or less, which depends on how B TXRUs and Q antenna elements are connected.

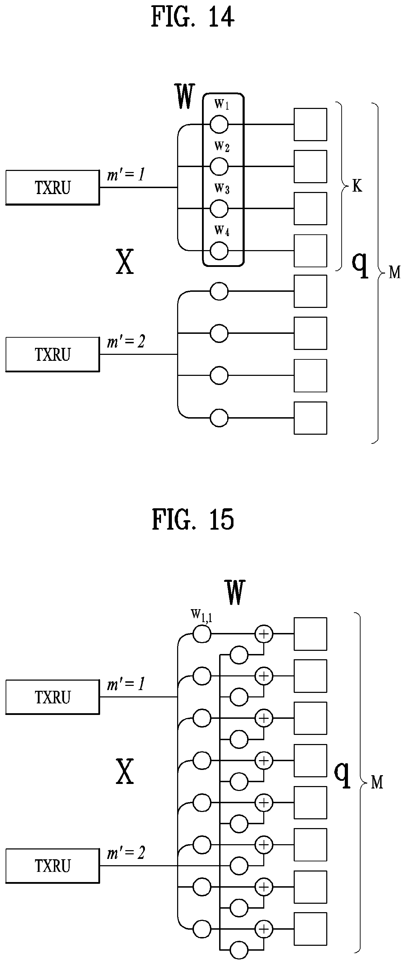

FIGS. 14 and 15 are diagrams illustrating representative methods for connecting TXRUs to antenna elements. Here, the TXRU virtualization model represents the relationship between TXRU output signals and antenna element output signals.

FIG. 14 shows a method for connecting TXRUs to sub-arrays. In FIG. 14, one antenna element is connected to one TXRU.

Meanwhile, FIG. 15 shows a method for connecting all TXRUs to all antenna elements. In FIG. 15, all antenna element are connected to all TXRUs. In this case, separate addition units are required to connect all antenna elements to all TXRUs as shown in FIG. 15.

In FIGS. 14 and 15, W indicates a phase vector weighted by an analog phase shifter. That is, W is a major parameter determining the direction of the analog beamforming. In this case, the mapping relationship between CSI-RS antenna ports and TXRUs may be 1:1 or 1-to-many.

The configuration shown in FIG. 14 has a disadvantage in that it is difficult to achieve beamforming focusing but has an advantage in that all antennas can be configured at low cost.

On the contrary, the configuration shown in FIG. 15 is advantageous in that beamforming focusing can be easily achieved. However, since all antenna elements are connected to the TXRU, it has a disadvantage of high cost.

### 4. Proposed Embodiments

According to the present invention, an efficient multiplexing method of uplink channels (e.g., UL control, UL data, UL sounding reference signal, random access signal, etc.) in an NR system operating on an unlicensed band is described in detail based on the above-described technology configurations.

FIG. 16 is a diagram schematically showing a frame structure according to one example of the present invention.

Referring to FIG. 16, in an NR system to which the present invention is applicable, a frame structure configured with DL control/Gap/LTL data/UL control time regions is applicable. Here, a frame unit of FIG. 16 may be named a subframe (or, a slot, a specific time interval, etc.). For clarity of the following description, although such a frame unit is named a subframe, the corresponding frame unit may be named the aforementioned technical expression according to an embodiment.

In this case, when a UE1 for which only a UL data channel transmission is scheduled and a UE2 attempting a UL control channel transmission only (without UL data) exist in the above-described subframe on an unlicensed band, the UE1 can perform LBT for the UL data channel transmission on the unlicensed band in a gap period. If the UE1 attempts the UL data channel transmission, a UL data channel of the UE1 may work as interference on the UE2 that is going to perform LBT right before the UL control channel transmission, whereby the UE2 may not attempt the UL control channel transmission by determining that the corresponding unlicensed band is busy. Yet, considering the importance of a UL control channel, such an operation may not be preferable. Hence, to solve such a problem, the present invention proposes an LBT method and a method of multiplexing a UL control channel and a UL data channel together.

### 3.1. Method 1 (Matching LBT performing interval for UL control channel transmission and UL data channel transmission)

### 3.1.1. Method 1-1

In FIG. 16, as well as a UE to transmit a UL data channel from a timing T2, a UE to transmit a UL control channel from a timing T3 is also configured to perform LBT in an interval T1 (e.g., a timing gap existing before the UL data channel or between the DL control channel and the UL data channel). Namely, if the UE to transmit the UL control channel from the timing T3 succeeds in the LBT in the interval T1, the UE transmit the UL control channel without performing LBT in addition right before the timing T3 (or, irrespective of the LBT result in an interval between the timing T2 and the timing T3).

Yet, in such a case, as an NR node of another network operator, a heterogeneous RAT (e.g., IEEE 802.11ad WiGig)) existing on the same frequency band or the like starts a transmission for the time between T2 and T3, a base station's reception reliability of a UL control channel may not be secured.

Therefore, as shown in FIG. 17, the present invention proposes a method of changing time region locations of a UL control channel and a UL data channel.

FIG. 17 is a diagram showing an applicable frame structure according to one example of the present invention.

According to the present invention, in order to minimize the influence of the aforementioned interference, as shown in FIG. 17, time region locations of a UL control channel and a UL data channel is changed. Furthermore, an LBT interval of a UE intending to transmit a UL control channel or a UL data channel is still configured as an interval T1.

Accordingly, if the UE to transmit the UL data channel succeeds in the LBT in the interval T1, the UE can transmit the UL data channel without performing LBT in addition right before the timing T3 (or, irrespective of the LBT result in an interval between the timing T2 and the timing T3).

In comparison with the case shown in FIG. 16, according to the above example, since the UE does not perform LBT and the interval between the transmissionallowed timings T2 and T3 is shortened, an effect of interference from another transmission node can be advantageously reduced.

### 3.1.2. Method 1-2

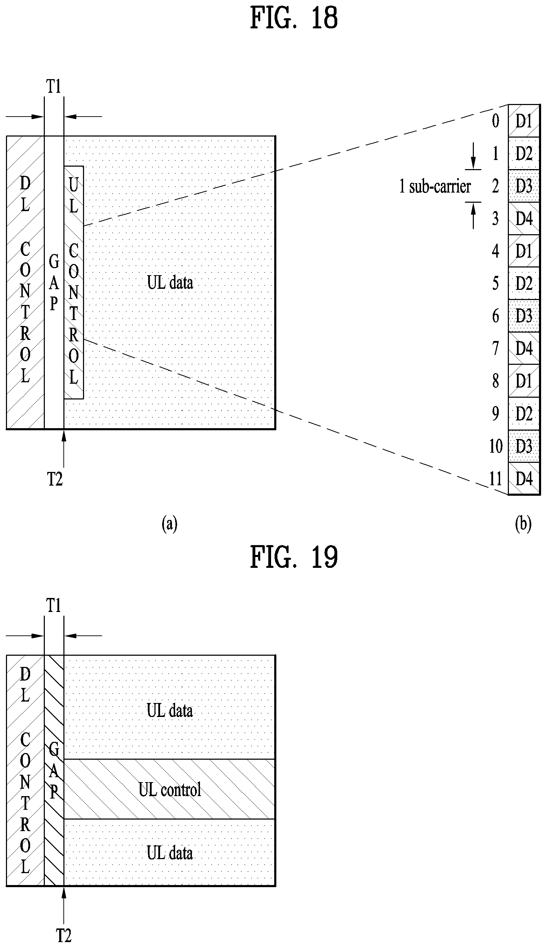

FIG. 18 is a diagram showing an applicable frame structure according to another example of the present invention.

If it is not preferable that a timing gap exists between an LBT performing interval and an actual transmission start point like the above-described method 1-1, as shown in the left drawing of FIG. 18 (i.e., FIG. 18 (a)), a start symbol of a UL control channel and a start symbol of a UL data channel can be configured identically.

In this case, DM-RS may be transmitted in a first symbol of the UL data channel for early data decoding. As shown in a right drawing of FIG. 18 (e.g., FIG. 18 (b)), DM-RS of a specific antenna port can be transmitted in an interval amounting to the specific subcarrier number among 12 subcarriers.

For example, a UE, which starts a transmission of a UL data channel from a timing T2, can transmit a DM-RS for the UL data channel using an AP corresponding to an AP #1 in subcarriers D1.

In doing so, a UL control channel can be transmitted through subcarriers {D2, D3, D4}. Some of the subcarriers {D2, D3, D4} may carry DM-RS for the UL control channel or some of the subcarriers may carry UL control information.

If the UE starting the transmission of the UL data channel from the timing T2 transmits the UL control channel on the corresponding resource region, the DM-RS for the UL control channel may not be transmitted. In this case, an NR based base station (i.e., a new generation NodeB (hereinafter gNB)) receiving the signal/channel can decode the UL control channel using the DM-RS for the UL data channel.

For clarity of the description of the present invention, a base station operating in an NR system according to the present invention is named a gNB so as to be distinguished from an eNB that is one example of an LTE base station. In some implementations, a gNB may be applied by being substituted with an eNB.

On the other hand, if the UE starting the transmission of the UL data channel from the timing T2 transmits the UL control channel on the corresponding resource region, DM-RS for UL data may not be transmitted. In this case, the gNB receiving the signal/channel can decode the UL data channel using the DM-RS for the UL control channel.

### 3.1.3. Method 1-3

FIG. 19 is a diagram showing an applicable frame structure according to further example of the present invention.

Referring to FIG. 19, a UL data channel and a UL control channel can be transmitted by Frequency Domain Multiplexing (FDM). Hence, a start timing of the UL data channel and a start timing of the UL control channel can be aligned to T2.

### 3.2. Method 2 (preparing LBT performing intervals for UL control channel transmission and UL data channel transmission individually)

### 3.2.1. Method 2-1

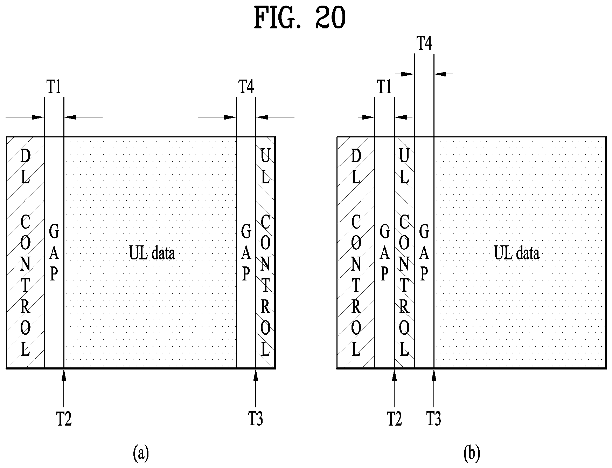

FIG. 20 is a diagram showing an applicable frame structure according to another further example of the present invention.

As a modification of the aforementioned method 1-1, as shown in FIG. 20, LBT performing intervals for UL data channel transmission and UL control channel transmission may be individually prepared.

Particularly, such technical configuration can be implemented in a manner that a Timing Advance (TA) value for the UL data channel transmission and a TA value for the UL control channel transmission are configured different from each other. In doing so, each of the TA values may be configured individually. Or, one of the two TA values may be configured only and the other may be configured by an offset value set in advance (or by L1 signaling or higher layer signaling).

As one example that one of the two TA values is set only and that the other is set by an offset value, in case of the left drawing of FIG. 20 (i.e., FIG. 20 (a)), a UL control channel transmission timing is set as one of the TA values and a separate offset value is set to indicate a time size that advances a TA for UL data channel transmission so as to make it relatively earlier than a TA for the UL control channel transmission. In this case, a UE to transmit a UL data channel at a timing T2 may be configured to attempt LBT for an interval T1 and a UE to transmit a UL control channel at a timing T3 may be configured to attempt LBT for an interval T4.

### 3.2.2. Method 2-2

Unlike the above-proposed configurations, a separate time gap may not be configured. Instead, in case that a first UE transmits a known signal on a specific frequency resource region or transmits the signal by emptying it, a second UE may be configured to perform LBT using the corresponding resource only. Or, the second UE may be allowed to transmit a UL control channel without LBT.

For one example, in case of the left drawing of FIG. 20 (i.e., FIG. 20 (a)), a UE transmitting a UL data channel may transmit a known signal through a partial resource region of last symbol(s) of the UL data channel. In doing so, if the UE performing LBT right before a transmission of the UL control channel in order to transmit the UL control channel discovers the known signal, the UE may determine whether a power value of a signal other than the known signal is equal to or smaller that a threshold and then attempt the transmission of the UL control channel.

For another example, in case of the left drawing of FIG. 20 (i.e., FIG. 20 (a)), a UE transmitting a UL data channel may transmit the data channel by emptying a partial resource region of last symbol(s) of the UL data channel. In doing so, if a power value measured in the corresponding partial resource region is equal to or smaller than a threshold, the UE performing LBT right before a transmission of a UL control channel in order to transmit the UL control channel discovers the known signal may attempt the transmission of the UL control channel.

### 3.2.3. Method 2-3

A UL control channel is always configured with a 2-symbol region, one symbol in the 2-symbol region is utilized for an LBT usage, and a UE may be configured to transmit a UL control channel through the other symbol in the 2-symbol region.

Here, typically, only the corresponding UL control channel region may be configured in a manner of differing in numerology (e.g., subcarrier spacing). For example, as a subcarrier spacing greater twice than a different symbol is applied to a UL control channel region, when a different symbol length is X µsec, a symbol length of the corresponding UL control channel region may be reduced to X/2 µsec. In this case, a UE may perform LBT for X/2 µsec and then transmit a UL control channel through 1 short symbol interval configured with X/2 µsec.

As another method, in configuring a UL control channel, a comb structure, in which one of two subcarriers does not carry a modulated symbol, is applicable. Particularly, if a UL control channel is generated in the comb structure, puncturing is performed on one half-symbol and a UL control channel can be transmitted in the other half-symbol. In this case, a corresponding UE or another UE may be configured to perform LBT during a half region of the punctured symbol.

In addition, in the above-described method 2, if a same UE transmits both a UL data channel and a UL control channel, although the UE secures a channel (or a corresponding unlicensed band) for the UL data channel, there may be a problem that the UE should perform a separate LBT for the transmission of the UL control channel.

Accordingly, according to the present invention, a UE that should transmit a UL data channel and a UL control channel simultaneously may be configured to transmit them in a manner of piggybacking UL control information on a UL data channel region (without separate signaling). Or, for a UE, a method of transmitting a UL data channel only and a method of transmitting a UL data channel and a UL control channel may be configured differently.

For example, in case of the left drawing of FIG. 20 (i.e., FIG. 20 (a)), a UE to transmit a UL data channel only may end a UL data transmission before a timing T4 to prepare an LBT interval for a transmission of a UL control channel. Or, a UE to transmit a UL data channel and a UL control channel both may use all of an interval T4 for a UL data channel transmission.

In some implementations, considering that indicating a transmission of a UL control channel may be Downlink Control Indicator (DCI) including DL scheduling information and that indicating a transmission of a UL data channel may be DCI including UL scheduling information, a UE having missed one of the two DCIs may have difficulty in having common understanding with a gNB for a resource region (or frame structure) of UL control/UL data/Gap.

For one example, regarding whether a UL control channel is located behind (like FIG. 16) or ahead of (like FIG. 17) a UL data channel in a time domain, there may be misalignment between a UE and a gNB.

For another example, in the aforementioned method 2, when a transmitting method in case of transmitting a UL data channel only is different from a transmitting method in case of transmitting a UL data channel and a UL control channel, there may be misalignment between a UE and a gNB. As a method for preventing this, DCI information may include the following information (or some of it) at least.
- Whether only a UL data channel transmission is scheduled in a specific subframe (or a unit time interval) without a UL control channel transmission
- Whether only a UL control channel transmission is scheduled in a specific subframe (or a unit time interval) without a UL data channel transmission
- Whether a UL data channel transmission is scheduled in a specific subframe (or a unit time interval) as well as a UL control channel transmission
- Resource region to carry a UL control channel
- Resource region on which LBT will be performed
- LBT method

Although a multiplexing method between a UL control channel and a UL data channel is mentioned in the above-described configurations for clarity of the description, the corresponding configuration can be identically extended and applied to a multiplexing method between UL control/UL data and UL Sounding Reference Signal (SRS).

For example, if a UL control channel transmitted symbol and an SRS transmitted symbol are configured as the same symbol, the above-described various multiplexing methods are applicable. Or, if an SRS transmitted symbol is configured as an independent symbol, a sensing period in common to UL data/UL control/SRS may be configured or a sensing period for each transmission may be configured independently.

Here, the DCI may be transmitted through UU-common DCI, UE-group-common DCI, UE-specific DL DCI, UE-specific UL DCI and the like.

In the following, based on the above-described technical configurations, major configurations applicable to the present invention shall be described.

First of all, a base station transmits a first Downlink Control Indicator (DCI) to a first UE to transmit a UL control channel and also transmits a second DCI including UL scheduling information to a second UE transmit a UL data channel. Here, each of the first DCI and the second DCI may include information on a resource region on which a corresponding UE will perform a channel access procedure to transmit a corresponding UL channel.

Subsequently, the base station receives at least one of the UL control channel and the UL data channel transmitted on an unlicensed band according to a result of the channel access procedure in the resource region for the channel access procedure indicated by the corresponding DCI per UE.

As one example applicable to the present invention, the resource region for the channel access procedure indicated by each of the first DCI and the second DCI may be configured as the same resource region.

In this case, the UL data channel and the UL control channel are transmitted by being TDMed and the UL control channel may be transmitted in a time region before or after the UL data channel in a manner of being adjacent to the UL data channel in a time domain.

Or, a transmission start timing of the UL data channel and a transmission start timing of the UL control channel may be configured identically.

Or, the UL data channel and the UL control channel may be transmitted by being FDMed.

As another example application to the present invention, the resource region for the channel access procedure indicated by the first DCI may be located in a previous time region of the UL control channel by being adjacent to the UL control channel in a time domain and the resource region for the channel access procedure indicated by the second DCI may be located in a previous time region of the UL data channel by being adjacent to the UL data channel in the time domain.

In this case, the UL control channel may be transmitted in a time region before or after the UL data channel in the time domain.

Moreover, the first DCI and the second DCI may be transmitted through UE-group-common DL control information.

In response to the above-described base station, the UE receives a Downlink Control Indicator (DCI) including DL or LTL scheduling information from the base station. In this case, the DCI may include information on a resource region for performing a channel access procedure to transmit a UL control or data channel scheduled by the DCI. Subsequently, the UE performs a channel access procedure in the resource region for the channel access procedure indicated by the DCI and then transmits a UL control or data channel scheduled by the DCI through an unlicensed band according to a result of the channel access procedure.

As examples of the above-described proposed methods can be included in the implementing methods of the present invention, they can be obviously regarded as a sort of proposed methods. Moreover, although the above-described proposed methods can be implemented independently, they may be implemented in a manner of combination (or aggregation) of some proposed methods. And, a rule may be defined in a manner that a base station informs a user equipment whether the proposed methods are applied (or information on rules of the proposed methods) through a predefined signal (e.g., physical layer signal or higher layer signal).

### 5. Device Configuration

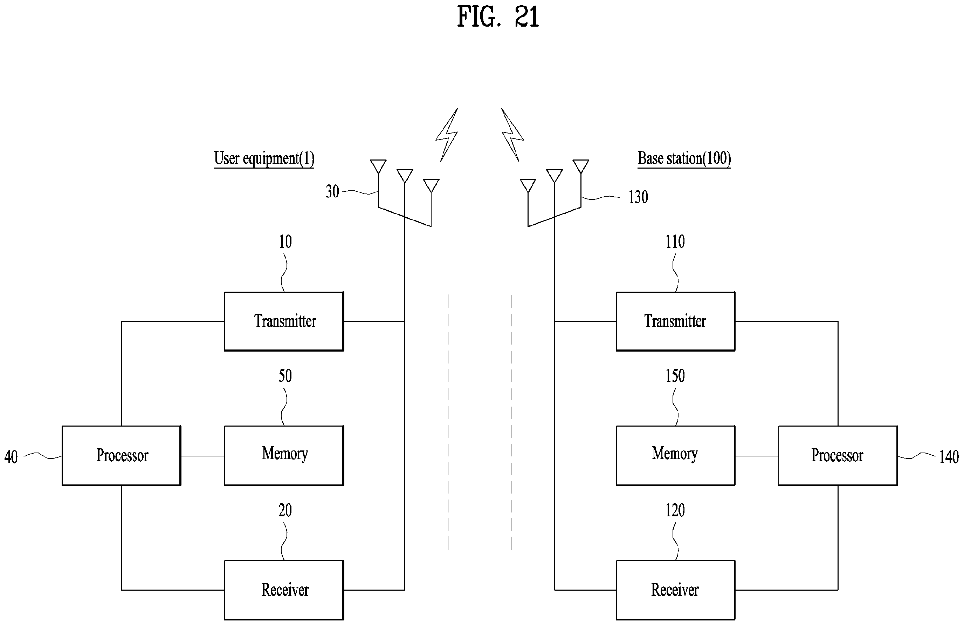

FIG. 21 is a diagram illustrating configurations of a UE and a base station capable of being implemented by the embodiments proposed in the present invention. The UE and the base station shown in FIG. 21 operate to implement the embodiments of the method for transmitting and receiving an uplink channel.

A UE 1 may act as a transmission end on a UL and as a reception end on a DL. A base station (eNB or gNB) 100 may act as a reception end on a UL and as a transmission end on a DL.

That is, each of the UE and the base station may include a Transmitter (Tx) 10 or 110 and a Receiver (Rx) 20 or 120, for controlling transmission and reception of information, data, and/or messages, and an antenna 30 or 130 for transmitting and receiving information, data, and/or messages.

Each of the UE and the base station may further include a processor 40 or 140 for implementing the afore-described embodiments of the present disclosure and a memory 50 or 150 for temporarily or permanently storing operations of the processor 40 or 140.

The above-configured base station 100 may transmit a first DCI including DL scheduling information to the first UE 1 to transmit a UL control channel through the transmitter 110 and also transmit a second DCI including UL scheduling information to the second LTE 2 to transmit a LTL data channel. Here, each of the first DCI and the second DCI may include information on a resource region on which a corresponding UE will perform a channel access procedure to transmit a corresponding UL channel. Subsequently, the base station 100 may receive at least one of the UL control channel and the UL data channel transmitted on an unlicensed band according to a result of the channel access procedure in the resource region for the channel access procedure indicated by the corresponding DCI per UE through the receiver 120.

In response to it, one UE 1 may receive a Downlink Control Indicator (DCI) including DL or UL scheduling information from the base station 100 through the receiver 20. In this case, the DCI may include information on a resource region for performing a channel access procedure to transmit a UL control or data channel scheduled by the DCI. Subsequently, the UE 1 may perform a channel access procedure in the resource region for the channel access procedure indicated by the DCI through the processor 40 and transmit a UL control or data channel scheduled by the DCI on an unlicensed band through the transmitter 10 according to a result of the channel access procedure.

The Tx and Rx of the UE and the base station may perform a packet modulation/demodulation function for data transmission, a high-speed packet channel coding function, OFDM packet scheduling, TDD packet scheduling, and/or channelization. Each of the UE and the base station of FIG. 21 may further include a low-power Radio Frequency (RF)/Intermediate Frequency (IF) module.

Meanwhile, the UE may be any of a Personal Digital Assistant (PDA), a cellular phone, a Personal Communication Service (PCS) phone, a Global System for Mobile (GSM) phone, a Wideband Code Division Multiple Access (WCDMA) phone, a Mobile Broadband System (MBS) phone, a hand-held PC, a laptop PC, a smart phone, a Multi Mode-Multi Band (MM-MB) terminal, etc.

The smart phone is a terminal taking the advantages of both a mobile phone and a PDA. It incorporates the functions of a PDA, that is, scheduling and data communications such as fax transmission and reception and Internet connection into a mobile phone. The MB-MM terminal refers to a terminal which has a multi-modem chip built therein and which can operate in any of a mobile Internet system and other mobile communication systems (e.g. CDMA 2000, WCDMA, etc.).

Embodiments of the present disclosure may be achieved by various means, for example, hardware, firmware, software, or a combination thereof.

In a hardware configuration, the methods according to exemplary embodiments of the present disclosure may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the methods according to the embodiments of the present disclosure may be implemented in the form of a module, a procedure, a function, etc. performing the above-described functions or operations. A software code may be stored in the memory 50 or 150 and executed by the processor 40 or 140. The memory is located at the interior or exterior of the processor and may transmit and receive data to and from the processor via various known means.

Those skilled in the art will appreciate that the present disclosure may be carried out in other specific ways than those set forth herein. The above embodiments are therefore to be construed in all aspects as illustrative and not restrictive. The scope of the disclosure should be determined by the appended claims, not by the above description, and all changes coming within the meaning of the appended claims are intended to be embraced therein.

### INDUSTRIAL APPLICABILITY

The present disclosure is applicable to various wireless access systems including a 3GPP system, and/or a 3GPP2 system. Besides these wireless access systems, the embodiments of the present disclosure are applicable to all technical fields in which the wireless access systems find their applications. Moreover, the proposed method can also be applied to mmWave communication using an ultra-high frequency band.

## Claims

1. A method for receiving an uplink channel by a base station, BS, in a wireless communication system supporting an unlicensed band, the method comprising:
transmitting, to a first user equipment, UE, a first Downlink Control Indicator, DCI, for transmitting an uplink control channel;
transmitting, to a second UE, a second DCI for scheduling transmission of an uplink data channel,
**characterized in that**
each of the first DCI and the second DCI comprises information about a time interval used for performing a first Listen-Before-Talk, LBT, procedure for the uplink control channel and a second LBT procedure for the uplink data channel; and
receiving through the unlicensed band at least one of the uplink control channel transmitted by the first UE and the uplink data channel transmitted by the second UE, based on results of the first LBT procedure and the second LBT procedure in the time interval.

2. The method of claim 1,
wherein the uplink data channel and the uplink control channel are transmitted by being Time Division Multiplexed, TDMed, and
wherein the uplink control channel is transmitted adjacent to the uplink data channel in a time domain.

3. The method of claim 1,
wherein a transmission starting point of the uplink data channel and a transmission starting point of the uplink control channel are configured identically.

4. The method of claim 1,
wherein the uplink data channel and the uplink control channel are transmitted by being Frequency Division Multiplexed, FDMed.

5. The method of claim 1,
wherein each of the first DCI and the second DCI are transmitted via UE group common downlink control information.

## Patentansprüche

1. Verfahren zum Empfangen eines Aufwärtsstreckenkanals durch eine Basisstation, BS, in einem Drahtloskommunikationssystem, das ein nicht lizenziertes Band unterstützt, wobei das Verfahren Folgendes umfasst:
Senden zu einem ersten Anwendergerät, UE, eines ersten Abwärtsstrecken-Steuerindikators, DCI, zum Senden eines Aufwärtsstrecken-Steuerkanals;
Senden zu einem zweiten UE eines zweiten DCI zum zeitlichen Planen des Sendens eines Aufwärtsstrecken-Datenkanals,
**dadurch gekennzeichnet, dass**
sowohl der erste DCI als auch der zweite DCI Informationen über ein Zeitintervall enthält, das verwendet wird, um eine erste Hören-vor-Sprechen-Prozedur, LBT-Prozedur, für den Aufwärtsstrecken-Steuerkanal und eine zweite LBT-Prozedur für den Aufwärtsstrecken-Datenkanal auszuführen; und
Empfangen auf dem nicht lizenzierten Band des Aufwärtsstrecken-Steuerkanals, der durch das erste UE gesendet wird, und/oder des Aufwärtsstrecken-Datenkanals, der durch das zweite UE gesendet wird, basierend auf Ergebnissen der ersten LBT-Prozedur und der zweiten LBT-Prozedur in dem Zeitintervall.

2. Verfahren nach Anspruch 1,
wobei der Aufwärtsstrecken-Datenkanal und der Aufwärtsstrecken-Steuerkanal durch Zeitmultiplex, TDM, gesendet werden und
wobei der Aufwärtsstrecken-Steuerkanal in einer Zeitdomäne benachbart zu dem Aufwärtsstrecken-Datenkanal gesendet wird.

3. Verfahren nach Anspruch 1,
wobei ein Sendestartpunkt des Aufwärtsstrecken-Datenkanals und ein Sendestartpunkt des Aufwärtsstrecken-Steuerkanals identisch konfiguriert werden.

4. Verfahren nach Anspruch 1,
wobei der Aufwärtsstrecken-Datenkanal und der Aufwärtsstrecken-Steuerkanal durch Frequenzmultiplex, FDM, gesendet werden.

5. Verfahren nach Anspruch 1,
wobei sowohl der erste DCI als auch der zweite DCI über Aufwärtsstrecken-Steuerinformationen, die der UE-Gruppe gemeinsam sind, gesendet werden.

## Revendications

1. Procédé de réception d'un canal sur la liaison montante par une station de base, notée BS, dans un système de communication sans fil admettant une bande sans licence, le procédé comprenant :
la transmission, à un premier équipement utilisateur, noté UE, d'un premier indicateur de commande sur la liaison descendante, noté DCI, pour la transmission d'un canal de commande sur la liaison montante ;
la transmission, à un deuxième UE, d'un deuxième DCI pour l'ordonnancement de la transmission d'un canal de données sur la liaison montante,
**caractérisé en ce que**
chacun des premier DCI et deuxième DCI comprend des informations concernant un intervalle de temps utilisé pour la réalisation d'une première procédure dite écouter avant de parler, notée LBT, pour le canal de commande sur la liaison montante et d'une deuxième procédure LBT pour le canal de données sur la liaison montante ; et
la réception, par le biais de la bande sans licence, du canal de commande sur la liaison montante transmis par le premier UE et/ou du canal de données sur la liaison montante transmis par le deuxième UE, sur la base de résultats de la première procédure LBT et de la deuxième procédure LBT dans l'intervalle de temps.

2. Procédé selon la revendication 1,
dans lequel le canal de données sur la liaison montante et le canal de commande sur la liaison montante sont transmis par multiplexage par répartition temporelle, noté TDM, et
dans lequel le canal de commande sur la liaison montante est transmis adjacent au canal de données sur la liaison montante dans un domaine temporel.

3. Procédé selon la revendication 1,
dans lequel un point de départ de la transmission du canal de données sur la liaison montante et un point de départ de la transmission du canal de commande sur la liaison montante sont configurés à l'identique.

4. Procédé selon la revendication 1,
dans lequel le canal de données sur la liaison montante et le canal de commande sur la liaison montante sont transmis par multiplexage par répartition en fréquence, noté FDM.

5. Procédé selon la revendication 1,
dans lequel chacun des premier DCI et deuxième DCI est transmis via des informations de commande sur la liaison descendante communes à un groupe d'UE.
